Europäisches Patentamt

European Patent Office

Office européen des brevets

(11) Veröffentlichungsnummer : **0 016 990**
**B1**

(12) **EUROPÄISCHE PATENTSCHRIFT**

(45) Veröffentlichungstag der Patentschrift :
03.02.82

(51) Int. Cl.³ : **G 05 D 16/06**, F 24 H 9/20,
F 23 N 1/00

(21) Anmeldenummer : **80101106.5**

(22) Anmeldetag : 05.03.80

(54) **Gasdruckregler.**

(30) Priorität : 10.03.79 DE 2909876

(43) Veröffentlichungstag der Anmeldung :
15.10.80 (Patentblatt 80/21)

(45) Bekanntmachung des Hinweises auf die Patenterteilung : 03.02.82 Patentblatt 82/05

(84) Benannte Vertragsstaaten :
AT BE CH FR GB IT LU NL SE

(56) Entgegenhaltungen :
DE - A - 2 141 802
DE - A - 2 253 091
DE - B2 - 1 550 293
US - A - 3 654 948

(73) Patentinhaber : Joh. Vaillant GmbH u. Co
Berghauser Strasse 40 Postfach 10 10 20
D-5630 Remscheid (DE)
AT BE CH FR GB IT LU NL SE
COFRABEL N.V.
Goldenhopestraat 15
B-1620 Drogenbos (BE)
BE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
K.W. PAULUS & CO. LTD.
Paulus House Heston Aerodrome Off Phoenix Way
Hounslow TW5 9ND (GB)
GB
SCHONEWELLE B.V.
Ellermanstraat 17
NL-1099 BX Amsterdam (NL)
NL

(72) Erfinder : Meier, Hans
An der Kirche 6
D-5828 Ennepetal-Voerde (DE)

Gasdruckregler

Die vorliegende Erfindung bezieht sich auf einen Gasdruckregler gemäß dem Oberbegriff des Hauptanspruchs.

Aus der Europäischen Patentanmeldung 80100564.6 (Veröffenlichungsnummer 016326), deren Inhalt, gemäß Art. 54 (3) zum Stand der Technik gehört, ist ein Gasdruckregler bekanntgeworden, der eine Einlaß- und eine Auslaßkammer aufweist, die über ein von einer Membran gegen die Rückstellkraft einer Feder gesteuertes Ventil miteinander verbindbar sind. Die eine Seite der Membran ist dabei dem Auslaßdruck ausgesetzt, die andere Seite der Membran kann über ein 3-Wege-Ventil mit dem Einlaßdruck oder mit dem Auslaßdruck verbunden werden. Dieser Membrankammer ist ein Ventil zugeordnet, das von einer weiteren Regelmembran gesteuert wird, die ihrerseits unter einem Vordruck steht, der von einer Fluidpumpe geliefert wird. Somit kann der Druck in dieser Kammer der Regelmembran in weiten Grenzen gesteuert und variiert werden. Der vorliegenden Erfindung liegt die Aufgabe zugrunde, einen Gasdruckregler zu schaffen, der ohne das erwähnte 3-Wege-Ventil auskommt und die gleiche Funktionssicherheit besitzt.

Die Lösung dieser Aufgabe liegt in den kennzeichnenden Merkmalen des unabhängigen Patentanspruchs.

Der hieraus resultierende technische Fortschritt liegt in einer erheblichen Verbilligung der Armatur.

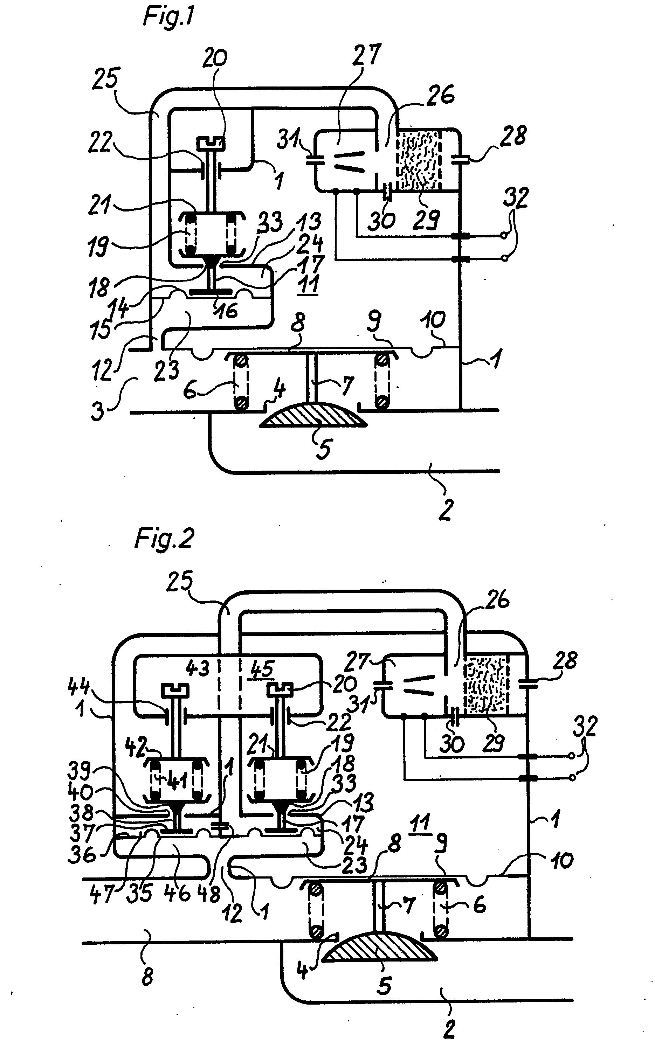

Weitere Ausgestaltungen und besonders vorteilhafte Weiterbildungen der Erfindung sind aus den abhängigen Ansprüchen der nachfolgenden Beschreibung und den Figuren 1 und 2 der Zeichnung ersichtlich, die ein Ausführungsbeispiel der Erfindung in Querschnittsprinzipdarstellungen zeigt.

Es bedeuten

Figur 1 eine Prinzipquerschnittsdarstellung eines Gasdruckreglers,

Figur 2 einen Gasdruckregler nach Figur 1 mit einer zusätzlichen Regelmembran und

Figur 3 ein Diagramm.

Gleiche Ziffern in den Figuren bedeuten gleiche Details.

Ein Gehäuse 1 eines Gasdruckreglers für ein gasbeheiztes Gerät, wie Kessel, Gasheizofen, Umlaufwasserheizer oder Durchlaufwasserheizer, weist eine Einlaßkammer 2 und eine zu einem Brenner führende Auslaßkammer 3 auf, die über einen Ventilsitz 4, der von einem Ventilkörper 5 gegen die Rückstellkraft einer Feder 6 beherrscht ist, verbunden sind. Der Ventilkörper 5 ist an einer Stellstange 7 befestigt, die ihrerseits mit einem Membranteller 8 verbunden is an dem die Feder 6 anliegt. Die Rückstellkraft der Feder 6 ist so gerichtet, daß der Ventilkörper 5 in Ruhestellung den Ventilsitz 4 verschließt. Der Membranteller 8 liegt an einer Membran 9 an, die längs ihres Umfangs 10 im Gehäuse 1 druckdicht eingespannt ist.

Die Stellmembran 9 ist somit mit ihrer Unterseite dem Druck der Auslaßkammer 3, mit ihrer Oberseite dem Druck einer Kammer 11 ausgesetzt.

Der Druck der Auslaßkammer 3 wird über einen Durchgang 12 einer Regelmembran 14 in einer Regelmembrankammer 13 zugeführt. Die Regelmembran 14 ist druckdicht längs ihres Umfangs 15 eingespannt.

Die Regelmembran 14 weist einen Membranteller 16 auf, der mit einer Ventilstange 17 in Verbindung steht, die an ihrem oberen Ende einen Ventilkörper 18 trägt, der über eine Druckfeder 19 vorspannbar ist. Die Druckfeder 19 stützt sich einmal gegen den Ventilkörper 18 und zum anderen gegen ein von einer Stellschraube 20 verstellbares Gegenlager 21 ab. Die Schraube ist mit ihrem Gewinde in einem Gegengewinde 22 des Gehäuses 1 geführt. Durch die Regelmembran 14 ist die Membrankammer 13 in eine untere Kammer 23 und eine obere Kammer 24 geteilt. Die untere Kammer 23 steht über den Durchgang 12 unter Druck der Auslaßkammer 3, die obere Kammer 24 ist über eine im Gehäuse 1 angeordnete Leitung 25 mit einem Einlaßraum 26, einer Fluidpumpe 27 sowie über einen Filter 29 und eine Ausgleichsbohrung 28 mit der Atmosphäre verbunden. Bei der Fluidpumpe 27 handelt es sich um eine Schwinganker-Membran-Gaspumpe, die Luft oder ein anderes Gas befördern kann. Der Fluidpumpe 27 wird das zu fördernde Gas bzw. die Luft einmal über die Leitung 25 und den Raum 26 zugeführt, Die Ausgleichsbohrung 28 stellt über den Luftfilter 29 im Raum 26 atmosphärischen Druck ein. Über eine Drosselbohrung 30 strömt Luft aus der Kammer 11 in den Raum 26. Die Fluidpumpe ist mit ihrem nicht dargestellten Motor so geschaltet, daß sie Luft bzw. Gas aus dem Raum 26 über eine Auslaßbohrung 31 in die Kammer 11 fördert. Dem Pumpenmotor kann elektrische Energie über Anschlüsse 32 zugeführt werden. Die elektrische Energie kann hierbei gesteuert werden, daß der Druck in der Kammer 11 bzw. der geförderte Durchsatz durch die Pumpe verstellbar ist. Der Ventilkörper 18 wirkt mit einem Ventilsitz 33 zusammen.

Die freien Durchlässe des Auslasses 31 und der Drosselbohrung 30 sind so bemessen, daß der Druck im Raum 11 über die elektrische Ansteuerung der Fluidpumpe 27 im gewünschten Arbeitsbereich am Auslaßraum 3 steuerbar ist.

Die Funktion des eben beschriebenen Gasdruckreglers ist folgende : Ausgehend vom Ruhezustand, in dem die Feder 6 den Ventilkörper 5 auf den Sitz 4 zieht und die Feder 19 den Ventilkörper 18 auf den Ventilsitz 33 drückt und die Pumpe nicht erregt ist, herrscht in der Auslaßkammer 3 Atmosphärendruck und in der Einlaßkammer 2 Netzdruck des speisenden Gases. Die Kammer 11 liegt auf Atmosphärendruck. Soll dem nicht dargestellten Brenner Gas über die Auslaß-kammer 3 zugeführt werden, so wird ein elektrisches Signal auf Anschlüsse 32 gegeben, so daß die Fluidpumpe 27 anläuft. Sie baut in der Kammer 11 einen Druck auf, der auf die Oberseite der Stellmembran 9 einwirkt. Die Stellmembran 9 beginnt einen Stellweg in Richtung auf den Ventilsitz 4, so daß der Ventilkörper 5 gegen die Rückstellkraft der Feder 6 durch die Stellstange 7 abgehoben wird. Als Folge davon tritt Gas aus der Einlaßkammer 2 in die Auslaßkammer 3 über, so daß der Gasdruck in der Auslaßkammer 3, vom Atmosphärendruck beginnend, ansteigt. Durch die Stauwirkung an den Brennflammen-Austrittsschlitzen bleibt ein Überdruck in der Auslaßkammer 3 erhalten. Dieser Auslaßdruck wirkt auf die Stellmembran 9 entgegen den Druck in der Kammer 11 ein. Dieser Druck steht aber über den Durchgang 12 auch in der Membrankammer 23 an. Membranfläche 14 und Druckfeder 19 bestimmen den im Auslaßraum 3 entstehenden maximalen Druck, da beim Abheben des Ventilkörpers 18 der Druck im Raum 11 begrenzt wird. Diese Regelstellung kann über die Vorspannung der Feder 19 mittels der Schraube 20 eingestellt werden. Durch das Öffnen des Ventils 18, 33 wird die Kammer 11 druckentlastet, das in die Kammer 11 von der Fluidpumpe 27 geförderte Gas bzw. die dorthin geförderte Luft wird über die Leitung 25 dem Einlaßraum 26 der Fluidpumpe zugeführt. Somit kann der Druck in der Kammer 11 gesteuert werden über eine Variation der elektrischen Leistung, zugeführt an den Anschlüssen 32 und begrenzt über eine Einstellung der Schraube 20, die die Abblaseschwelle des Ventils 18, 33 beeinflußt. Die von der Fluidpumpe 27 einmal geförderte Luft wird im Kreislauf umgesetzt, Luftzutritt von außen über die Ausgleichsbohrung 28 ist nur bei Änderung des Luftdrucks oder der Temperatur notwendig. Die von dort zutretende frische Luft wird über den Luftfilter 29 gereinigt. Mit dem eben beschriebenen Gasdruckregler ist es nur möglich, eine einzige Druckschwelle in der Auslaßkammer 3 einzuregeln. Um auch noch eine Teillastschwelle einfacher anfahren zu können, ist eine weitere Ausgestaltung des Gasdruckreglers nach Figur 2 möglich. Zusätzlich zu den Anordnungen und der Wirkungsweise nach Figur 1 ist eine weitere Regelmembran 35 vorgesehen, die längs ihres Umfangs 36 im Gehäuse 1 eingespannt ist, einen Membranteller 37 und eine Ventilstange 38 auf-weist, die mit einem Ventilkörper 39 verbunden ist, der einen Ventilsitz 40 im Gehäuse 1 beherrscht. Der Ventilkörper 39 ist von einer Druckfeder 41 mit einer Kraft belastbar, deren Produkt mit der zugehörigen Regelmembran 35 kleiner ist als das der Feder 19 mit der Membran 14. Die Druckfeder 41 wird von einem Widerlager 42 beherrscht, das von einer Schraube 43 einstellbar ist, die Schraube 43 ist in einem Gegengewinde 44 im Gehäuse 1 geführt. Die Köpfe der beiden Schrauben 43 und 20 sind frei zugänglich. Der Durchgang 12, der von der Auslaßkammer 3 abgeht, steht nicht nur mit der Kammer 23, sondern auch mit einer Kammer 46 in Ver-bindung, die zum Teil von Gehäuse 1, zum Teil von der Unterseite der Membran 35 gebildet wird. Oberhalb der Membran 35 ist eine Kammer 47 gebildet, die über eine Abströmdüse 48 mit der Leitung 25 in Verbindung steht. Der Gasdruckregler gemäß Figur 2 weist noch folgende Funktion auf, die der Gasdruckregler nach Figur 1 nicht bietet :

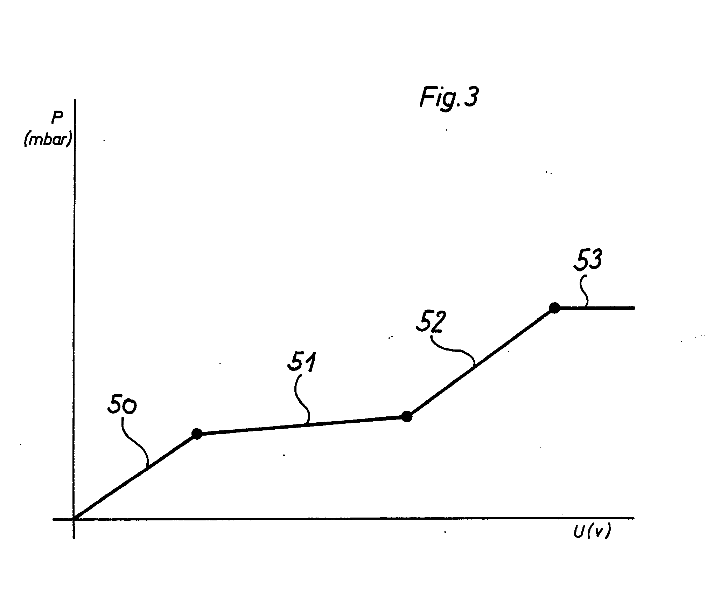

Aus der Kammer 47 kann begrenzt Druck über die Abströmdüse 48 abgelassen werden. Jedoch ist deren Durchlaßquerschnitt so klein bemessen, daß die Fluidpumpe 27 im Raum 11 einen Druckanstieg bis zur Ablaßschwelle des Ventils 18, 33 erreichen kann. Diese Verhältnisse sind aus dem Diagramm der Figur 3 näher er-sichtlich. Hier ist der Druck in der Ausgangskammer 3 in Abhängigkeit von der Spannung an den elektrischen Anschlüssen 32 aufgezeichnet :

Ausgehend vom Ruhezustand herrscht bei Stillstand der Pumpe 27 ein Druck 0 in der Ausgangskammer 3, da etwa vorher aufgebauter Druck durch die Fluidpumpe 27 über die Drosselbohrung 30 abgebaut wurde. Bei Anlegen von Spannung an die Fluidpumpe 27 wird zunächst ein Druck in der Kammer 11 aufgebaut, bis die Reaktionsschwelle der Regelmembran 35 erreicht ist. In diesem Bereich steigt der Druck in der Auslaßkammer 3 proportional gemäß dem Kurvenstück 50. Im Moment des Öffnens des Ventils 39, 40 verläuft der Druck über die steigende Spannung U nahezu konstant gemäß einem Kurvenstück 51, da der weitere Druckanstieg in der Kammer 11 über das geöffnete Ventil 39, 40 und die Abströmdüse 48 etwa konstantgehalten wird. Es ist hier ein leichter, nicht ins Gewicht fallender Anstieg des Drucks in der Kammer 11 vorhanden. Bei weiterer steigender Energieversorgung für die Fluidpumpe 27 ist der abfließende Gastrom über das Ventil 39, 40 durch die Abströmdüse 48 begrenzt. Es ist auch denkbar, daß der Ventilkörper 39 nach Durch-fahren des Regelhubes den Gasstrom wieder völlig sperrt. Bei weiterem Ansteigen der Förderleistung der Pumpe 27 steigt somit der Luftdruck in der Kammer 11. Somit entsteht der Kurvenast 52. Der hiervon abknickende Kurvenast 53 resultiert aus dem Ansprechen des Ventils 18, 33, nämlich wenn die Membran 14 bei weiter ansteigendem Druck in der Kammer 11 dieses Ventil öffnet.

**Ansprüche**

1. Gasdruckregler mit einem in einem Gehäuse (1) angeordneten, von einem federrückstellbaren Ventilkörper (5) beherrschten Ventilsitz (4), dessen Ventilkörper (5) von einer Stellmembran (9) beherrscht ist, die dem Gasdruck hinter dem Ventil in einer Auslaßkammer (8) ausgesetzt ist, und mit einer Regelmembran (14), die einerseits dem Gasdruck hinter dem Ventil ausgesetzt ist, und mit einer Fluidpumpe (27), dadurch gekennzeichnet, daß die dem Gas abgewandte Seite der Stellmembran (9) nur vom Druck der Fluidpumpe (27) beaufschlagt ist und daß dieser Druck von einem mit der Regelmembran (14, 35) gekoppelten Ventil (18, 33 bzw. 39, 40) begrenzt ist.

2. Gasdruckregler nach Anspruch 1, dadurch gekennzeichnet, daß die Rückstellkraft für die Regelmembran (14, 35) einstellbar ist.

3. Gasdruckregler nach Anspruch 2, dadurch gekennzeichnet, daß die Regelmembran (14, 35) über eine Stange (17, 38) mit einem Ventilkörper (18, 39) verbunden ist, der mit einem Ventilsitz (33, 40) im Gehäuse (1) zusammenwirkt und daß der Ventilkörper (18, 39) über eine von einer Schraube (20, 41) einspannbare Feder (19, 43) vorspannbar ist.

4. Druckregler nach einem der Ansprüche 1 bis 3, dadurch gekennzeichnet, daß der Abströmraum (24) der Regelmembran (14) über einen Luftgaskanal (25) mit einem Einlaßraum (26) der Fluidpumpe (27) verbunden ist.

5. Gasdruckregler nach einem der Ansprüche 1 bis 4, dadurch gekennzeichnet, daß der Einlaßraum (26) der Fluidpumpe (27) über eine Drosselbohrung (30) mit dem Auslaß der Fluidpumpe in Verbindung steht.

6. Gasdruckregler nach einem der Ansprüche 1 bis 5, dadurch gekennzeichnet, daß zwei Regelmembranen (35, 14) vorgesehen sind, deren Ventilkörper (39, 18) unterschiedliche Ansprechschwellen aufweisen und daß die Abströmkammer (47) des bei einer geringeren Druckschwelle ansprechenden Ventils (39, 40) über eine Abströmdüse (48) mit dem zum Fluidpumpeneinlaßraum (26) führenden Kanal (25) verbunden ist.

## Claims

1. A gas pressure regulator comprising a valve seat (4), which is disposed in a housing (1) and controlled by a valve member (5) that is resettable by a spring and controlled by an actuating diaphragm (9), which is subjected to the gas pressure in an outlet chamber (8) behind the valve, further comprising a control diaphragm (14), which is subjected on one side to the gas pressure behind the valve, and a fluid pump (27), characterized in that that side of the control diaphragm (9) that faces away from the gas is subjected only to the pressure of the fluid pump (27) and that said pressure is limited by a valve (18, 33 or 39, 40) coupled to the control diaphragm (14, 35).

2. A gas pressure regulator according to claim 1, characterized in that the force for resetting the control diaphragm (14, 35) is adjustable.

3. A gas pressure regulator according to claim 2, characterized in that the control diaphragm (14, 35) is connected by a rod (17, 38) to a valve member (18, 39), which cooperates with a valve seat (33, 40) in the housing (1), and that the valve member (18, 39) is adapted to be preloaded by a spring (19, 43), which is adapted to be gripped by a screw (20, 41).

4. A pressure regulator according to any of claim 1 to 3, characterized in that the discharge chamber (24) of the control diaphragm (14) communicates through an air gas passage (25) with an inlet chamber (26) of the fluid pump (27).

5. A gas pressure regulator according to any of claims 1 to 4, characterized in that the inlet chamber (26) of the fluid pump (27) communicates through a constricted bore (30) with the outlet of the fluid pump.

6. A gas pressure regulator according to any of claims 1 to 5, characterized in that two control diaphragms (35, 14) are provided and have valve members (39, 18) which have different response thresholds and that the discharge chamber (47) of the valve (39, 40) which responds to a lower threshold pressure communicates through a discharge nozzle (48) with the passage (25) leading to the inlet chamber (26) of the fluid pump.

## Revendications

1. Régulateur de pression de gaz comportant un siège (4) disposé dans un corps (1) et commandé par un obturateur (5) pouvant être rappelé par ressort, l'obturateur (5) étant commandé par une membrane de manœuvre (9) exposée à la pression de gaz derrière la valve dans une chambre d'échappement (8), ainsi qu'une membrane régulatrice (14) exposée d'un côté à la pression de gaz derrière la valve, et une pompe à fluide (27), caractérisé en ce que du côté opposé au gaz, la membrane de manœuvre (9) est seulement soumise à la pression de la pompe à fluide (27), et en ce que cette pression est limitée par une valve (18, 33 ; 39, 40) couplée à la membrane régulatrice (14, 35).

2. Régulateur de pression de gaz selon la revendication 1, caractérisé en ce que la force de rappel de la membrane régulatrice (14, 35) est réglable.

3. Régulateur de pression de gaz selon la revendication 2, caractérisé en ce que la membrane régulatrice (14, 35) est reliée par une tige (17, 38) à un obturateur (18, 39) qui coopère avec un siège (33, 40) du corps (1), et en ce que l'obturateur (18, 39) peut être préchargé par l'intermédiaire d'un ressort (19, 43) pouvant être tendu par une vis (20, 41).

4. Régulateur de pression selon l'une quelconque des revendications 1 à 3, caractérisé en ce que la cavité d'écoulement (24) de la membrane régulatrice (14) est reliée par un canal à gaz à air (25) à une cavité d'entrée (26) de la pompe à fluide (27).

5. Régulateur de pression selon l'une quelconque des revendications 1 à 4, caractérisé en ce que la cavité d'entrée (26) de la pompe à fluide (27) est en communication, par l'intermédiaire d'une perforation d'étranglement (30), avec la sortie de la pompe à fluide.

6. Régulateur de pression selon l'une quelconque des revendications 1 à 5, caractérisé en ce qu'il comporte deux membranes régulatrices (35, 14) dont les obturateurs (39, 18) présentent des seuils de réponse différents, et en ce que la chambre d'écoulement (47) de la valve (39, 40) réagissant à une pression de seuil plus faible est reliée à travers une buse d'écoulement (48) avec le canal (25) conduisant à la cavité d'entrée (26) de la pompe à fluide.

0 016 990

Fig.1

Fig.2

Fig.3